# EUROPEAN PATENT SPECIFICATION

(11) **EP 1 257 411 B1**
(45) Date of publication and mention of the grant of the patent: **19.08.2009**
(21) Application number: 01914452.6
(22) Date of filing: 23.02.2001
(51) Int. Cl.: B29C 45/17, B29C 45/16, B29C 45/00

(54) **Multi-component injection moulding with liquid injection for articles with knit lines and article produced thereby**
Mehrkomponenten-Spritzgiessenverfahren mit Flüssigkeitsinjektion für Artikel mit Bindenähten und damit hergestellter Artikel
Procédé de moulage par injection à plusieurs composants avec d'injection de liquide pour articles avec des lignes des soudure et article obtenu par ce procédé

(30) Priority: 24.02.2000 US 184743 P; 24.02.2000 US 184639 P; 24.02.2000 US 184564 P; 29.01.2001 US 264916 P
(43) Date of publication of application: 20.11.2002
(73) Proprietor: Conix Corporation, Dearborn, MI 48126-6201 (US)
(72) Inventor: PORTER, Marshall, Ray, Oakdale, IL 62268 (US)
(74) Representative: Hössle Kudlek & Partner
(86) International application number: PCT/US2001/005850
(87) International publication number: WO 2001/062479

(56) References cited:
- EP-A- 0 952 187
- WO-A-98/24610
- WO-A-98/34771
- WO-A-98/39150
- US-A- 3 873 656
- US-A- 5 169 648
- US-A- 5 169 648
- US-A- 5 387 391
- US-A- 5 637 328
- US-A- 5 855 840
- PATENT ABSTRACTS OF JAPAN vol. 1998, no. 05, 30 April 1998 (1998-04-30) -& JP 10 015981 A (TOYODA GOSEI CO LTD), 20 January 1998 (1998-01-20)
- DATABASE WPI Derwent Publications Ltd., London, GB; AN 1993-120778 [15] XP002234060 "INJECTION MOLDING OF THERMOPLASTIC RESIN" -& JP 05 057741 A (MITSUBISHI GAS CHEM CO INC), 9 March 1993 (1993-03-09)
- RUSCH K C: "GAS ASSISTED INJECTION MOLDING - THE NEW THERMOPLASTIC MOLDING TECHNOLOGY FOR EXTERIOR BODY PANELS" , PLASTICS IN AUTOMOBILES: BUMPER SYSTEMS, INTERIOR TRIM, INSTRUMENT PANELS, AND EXTERIOR PANELS. DETROIT, FEB. 27 - MAR. 3, 1989, INTERNATIONAL CONGRESS AND EXPOSITION, WARRENDALE, SAE, US, PAGE(S) 155-162 XP002069380 * the whole document *
- PATENT ABSTRACTS OF JAPAN vol. 1995, no. 01, 28 February 1995 (1995-02-28) -& JP 06 285911 A (MITSUBISHI RAYON CO LTD), 11 October 1994 (1994-10-11)
- PRITCHARD, G.: "Plastics Addidtives - An A-Z referenze" 1998 , CHAPMAN & HALL , LONDON XP002233970 ISBN: 041272720 Chapter: Reinforcing Fibres * page 544-558 *
- "RESEARCHERS ANNOUNCE LATEST ADVANCES IN NANOCOMPOSITES" June 1999 (1999-06) , EUROPEAN PLASTICS NEWS, IPC BUSINESS PRESS LTD. LONDON, GB, VOL. 26, NR. 6, PAGE(S) 41 XP000958184 ISSN: 0306-3534 * the whole document *

## Description

### FIELD OF THE INVENTION

The present invention relates to molding processes. Specifically, the present invention relates to injection molding processes which provide for increased strength of injection-molded articles that contain reinforcing fibers or particles.

### BACKGROUND OF THE INVENTION

Injection molding typically involves the injection of molten resin through one or more gates to create multiple flow fronts within the mold. Flow fronts are the leading interface of a resin stream flowing within the mold. Multiple flow fronts may derive from multiple gates in the mold or from multiple flow paths communicating from a single gate. As the molding process progresses, the flow fronts eventually meet one another, resulting in the formation of one or more knit lines.

In the prior art, knit lines represent areas of decreased strength in the molded article. In molding processes that utilize fiber reinforcement in the resin, fiber materials tend to align in the direction of resin flow within the mold and typically do not become oriented or meshed across knit lines. As such, the use of injection molding to produce structural articles with fiber reinforced resins has been somewhat problematic. For example, reinforcement structures in vehicles are required to have rigid crossways linking the left and right sides together and sufficient strength to support bumper fascias, grille components, headlamps, radiator, washer fluid reservoir and other components of the vehicle. Conventionally, such reinforcement structures have been made from several stamped steel components welded together or from compression-molded continuous glass mat reinforced plastic. Although it has been recognized that injection molding techniques generally result in a less-expensive and lighter-weight end product than stamped-steel constructions or compression molding, conventional injection molding has not heretofore been widely employed for creating structural articles.

U.S. Patent Nos. 5,556,650 and 5,417,916 teach an injection system using a single injection point for a fluid to displace a first portion of the molten plastic resin from a first portion of an article-defining cavity into a secondary portion of the article-defining cavity. There are limitations in using such a system having a single molten flow front to make complex shaped articles. For example, injection of a pressurized fluid may not adequately displace molten plastic resin through complex shaped articles. Further, knit lines can develop where flow fronts meet, resulting in decreased strength and structural integrity.

JP 10015981 A describes a manufacturing method for a hollow molded body using a mold with multi-gates. While injecting melting resin, gas is pressed from two or more gas gates subsequently to the inside of the melting resin and forming to or more centrums from two or more resin gates in a cavity. The meld which is formed when the flow of melting resin contacts among these centrums is subsequently destroyed by reducing the gas pressure in at least one gas gate rather than the pressure of other gas gates, thus forming a penetrated hollow space.

JP 05057741 A which discloses the features of the preamble of claim 1 refers to thermoplastic resin products having rib structures at their both ends which are injection molded by injecting fiber reinforced resin to an injection mold having a plurality of resin gates and an inert gas injection hole. The inert gas injection hole is placed on the back of the molded product proposing the central resin gate. Inert gas is pressed toward weld lines which are formed at the central part between each neighboring resin gate in order to destroy those weld lines. The hollow bodies disclosed therein are used for housing or frames of electronic or electric components.

WO 98/34771 deals with a process in the manufacturing of a plastic hollow product in a mould including a hot runner system. With the help of the hot runner system the wall thickness of the molded hollow products can be adjusted.

JP 06285911 A provides a weld line reinforcing method by forming a weld line with deep irregularity within a molded product.

To summarize, articles that require increased strength and structural integrity, such as structural polymeric articles like reinforcing members for automobiles, are difficult if not impossible to make using conventional injection molding techniques.

Accordingly, it is a primary objective of the invention to provide molding processes and apparatus for making injection molded fiber-reinforced articles of increased strength as compared to articles made by prior art techniques.

### SUMMARY OF THE INVENTION

The present invention provides processes for injection-molding an article with a fluid channel formed therein to provide strength and structural integrity. The process includes providing a mold defining a mold cavity for a part or article, providing at least first and second resin streams within the mold cavity wherein each resin stream has a flow front, causing the flow fronts of the resin streams to meet at a longitudinal point in the mold cavity to form a first layer of solidified resin on a peripheral surface of the mold, the first layer having a knit line where the resin streams meet; and introducing a fluid into the molten resin in the mold to form a fluid channel and a second layer of solidified resin, the second layer between the fluid channel and the first layer, wherein the second layer is devoid of a knit line at the longitudinal point of the knit line in the first layer. Where desired, the fluid may be introduced and the resin may be retained within the mold, or a portion of the resin can overflow outside of the mold.

The fluid channel formed in accordance with the present invention may have a cross-section that is generally circular in shape and may extend substantially through multiple portions of the molded article. In accordance with the present invention, orientation of reinforcing fibers in the second layer of solidified resin may be in a direction that is generally transverse to the knit line in the first solidified resin layer. Further, the reinforcing fibers in the second layer of solidified resin can extend across the longitudinal point where the flow fronts meet. The formation of the second layer of solidified resin that is devoid of knit lines at the longitudinal point of the knit lines in the first layer of solidified resin results in increased enhanced structural integrity of the molded article. Further, the present invention can be used to make structural reinforcement articles, such as reinforcement members for vehicles, that could not be practically manufactured using conventional injection molding techniques.

A molding apparatus suitable to be used according to the invention may include a mold defining a mold cavity for a part or article, and at least one gate for introducing molten resin into the mold cavity. In a preferred embodiment, multiple gates can be used to introduce molten resin into the mold cavity. The mold is also provided with means for introducing a fluid, such as a compressed gas (for example, air or nitrogen) or a pressurized liquid (for example, water), into the mold cavity at an appropriate place and time. The fluid comprises a different material than the resin. Preferably, the fluid is introduced at a time when the resin that is immediately adjacent the mold cavity has begun to solidify into a first layer of solidified resin due to the cooling provided by the mold surface. The first layer of solidified resin is between the mold surface and resin near the center of the mold cavity that is still in a molten state. As a result, injection of the fluid into the mold cavity results in the displacement of the molten resin near the center of the mold cavity and the formation of a fluid channel.

Displacement of the molten resin also results in a reorientation of reinforcing fibers in the molten resin in the vicinity of the knit lines in the first layer of solidified resin, such that when that molten resin solidifies to form a second layer of solidified resin devoid of a knit line, fibers in the second layer are oriented transverse to the knit lines in the first layer. The displaced molten resin can be used to fill unfilled portions of the mold cavity to form first and second layers therein (a process that can be referred to as a "short shot" or "packing out" method) and/or the displaced resin can be displaced to an overflow chamber (a process that can be referred to as an "overflow" method). Injection of fluid may occur through nozzles in fluid communication with the mold cavity and similar to those utilized for conventional gas-assisted molding techniques.

In one of its broadest applications, the invention uses an apparatus for injection molding articles comprising a mold including at least a gate for the introduction of molten resin including reinforcing fibers, the resin traveling within the mold defining at least two flow fronts, the flow fronts meeting to form a knit line at a longitudinal point in a first layer of solidified resin, the first layer on the peripheral surface of the part being formed, and further including means for injecting a fluid into the resin within the mold to form a fluid channel in the molded article, and a second layer of solidified resin between the fluid channel and the first layer of solidified resin, the second layer devoid of a knit line at the longitudinal point of the knit line in the first layer. Preferably, reinforcing fibers in the second layer may be orientated in a direction that is substantially transverse to the knit line.

In another of its broadest applications, the invention also provides a process for injection molding articles, the process comprising the steps of: a) providing a mold defining a mold cavity; b) providing first and second resin streams within the mold cavity, each resin stream having a flow front; c) causing the flow fronts of the resin streams to meet to form a knit line at a longitudinal point in a first layer of solidified resin; and d) introducing a fluid into the resin in the mold, and e) forming a fluid channel and a second layer of solidified resin, the second layer between the fluid channel and the first layer, the second layer devoid of a knit line at the longitudinal point of the first layer.

Co-injection of two or more different molten resins can also be used in accordance with the present invention to form different first and/or second solidified resin layers at different portions of a part as may be desired. More specifically, co-injection of two or more different molten resins can be performed at the same or different gate locations and/or a different times as may be desired.

A primary advantage provided by the invention is increased strength of molded articles, especially at the longitudinal point of knit lines, by forming a second layer devoid of a knit line at that longitudinal point of knit lines in the first layer. Thus, articles molded according to the invention will typically have greater strength and structural integrity than articles molded according to conventional techniques. Moreover, articles that require increased strength and structural integrity, such as structural polymeric articles for vehicles, may formed in accordance with the present invention that could mot be made using conventional injection molding techniques.

### BRIEF DESCRIPTION OF THE DRAWINGS

The accompanying drawings which are incorporated into and form a part of the specification, illustrate preferred embodiments of the present invention and, together with the description, serve to explain the principles of the invention. The drawings are only for the purpose of illustrating a preferred embodiment of the invention and are not to be construed as limiting the invention. In the drawings, in which like numbers refer to like parts throughout:
FIGURE 1 is an illustration of a section taken along a mold centerline and illustrating a process and apparatus for molding an article according to a preferred embodiment of the invention, showing the introduction of molten resin into the mold;
FIGURE 2A is an illustration of a section taken along a mold centerline and illustrating a process and apparatus for molding an article according to a preferred embodiment of the invention, that is, a preferred "short shot" method, showing unfilled cavities prior to fluid injection;
FIGURE 2B is an illustration of a section taken along a mold centerline and illustrating a process and apparatus for molding an article according to another preferred embodiment of the invention, that is, a preferred "overflow" method, showing the formation of knit lines in a solidified outerlayer, and no knit lines in a liquid resin inner layer prior to fluid injection;
FIGURE 3 is an illustration of a section taken along a side view and illustrating a process and apparatus for molding an article according to a preferred embodiment of the invention, showing a fluid injection apparatus for forming of a fluid channel;
FIGURE 4 is a magnified view of a fluid channel 50 formed by the process and apparatus illustrated in FIGURES 1 through 3.
FIGURES 5-7 and 8-10 illustrate a process and apparatus for molding an article using a "packing out" or "short shot" method and an "overflow" method, respectively.

### DESCRIPTION OF THE PREFERRED EMBODIMENTS

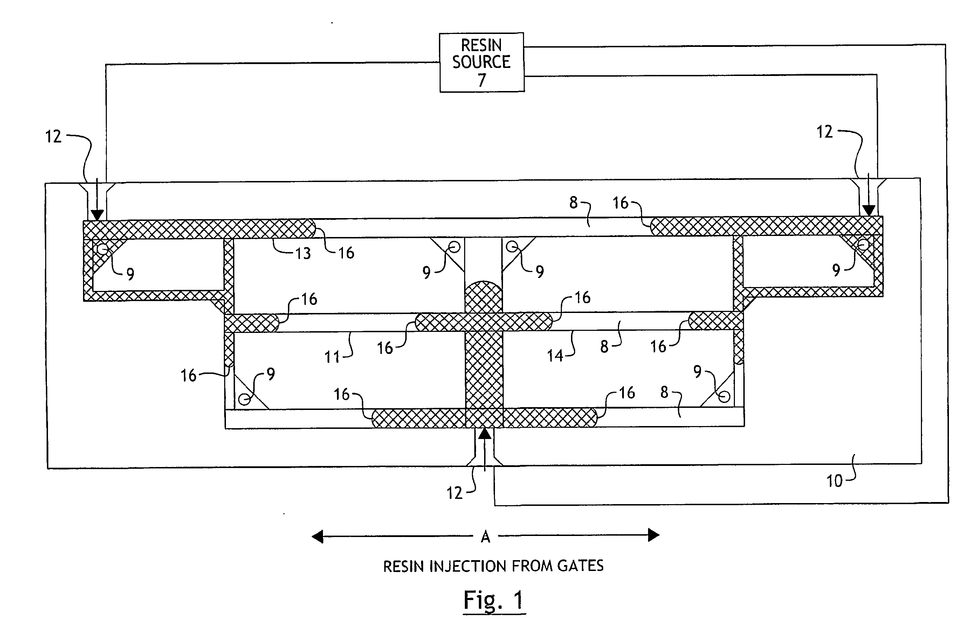

FIGURE 1 is a section taken along a mold centerline so as to reveal the back half of the mold 10 and the back half 11 of the mold cavity 14. The exemplary mold 10 is for a reinforcement member in a vehicle which includes a number of cross-members associated with cross-member mold cavities 8 of mold cavity 14 which extend in a cross-vehicle direction, i.e., in a direction transverse to the plane of the driver and passenger doors of the vehicle. The reinforcement member made in accordance with the present invention can support a wide variety of components in a vehicle, including but not limited to bumper fascias, battery, grille components, headlamps, radiator, washer fluid reservoir and other components of a vehicle. Generally, in the case of such reinforcement members, it is desirable to provide the greatest structural strength in the cross-vehicle direction, which is generally indicated by the arrow (A). This is because the molded reinforcement member is typically utilized to support a number of components of the vehicle, including the battery, windshield fluid reservoirs, headlights, etc. The reinforcing member is also provided with a number of through holes associated with through hole projections 9 for mounting to the vehicle. It will be recognized by those of ordinary skill that the illustrated reinforcement is merely exemplary and it will be recognized that the invention finds broad application to the molding of many other structural articles.

Mold 10 includes a number of gates 12 for introducing molten resin 13 from a resin source 7 into the mold cavity 14. As can be seen, as molten resin is introduced into the mold through gates 12, a number of flow fronts 16 are formed as the resin streams progress within the mold cavity 14. While multiple gates 12 are shown, a single gate 12 can be sued and still obtain multiple flow fronts 16 as the resin flows through the cavity 14. Typically, the molten resin will comprise reinforcing fibers, such as glass and/or carbon fibers, or reinforcing particles, such as nanoparticles (for example, nanoparticles comprising smectite clay), for increasing the structural strength of the molded article. The resin can be any suitable resin, including but not limited to polypropylene, polyethylene, and/or acrylonitrile butadiene styrene (ABS).

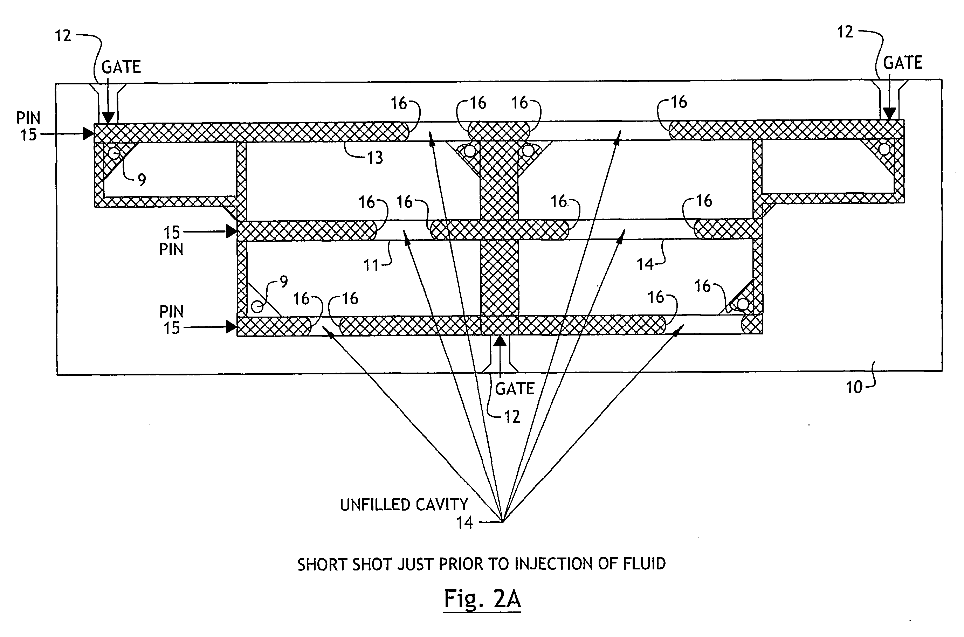

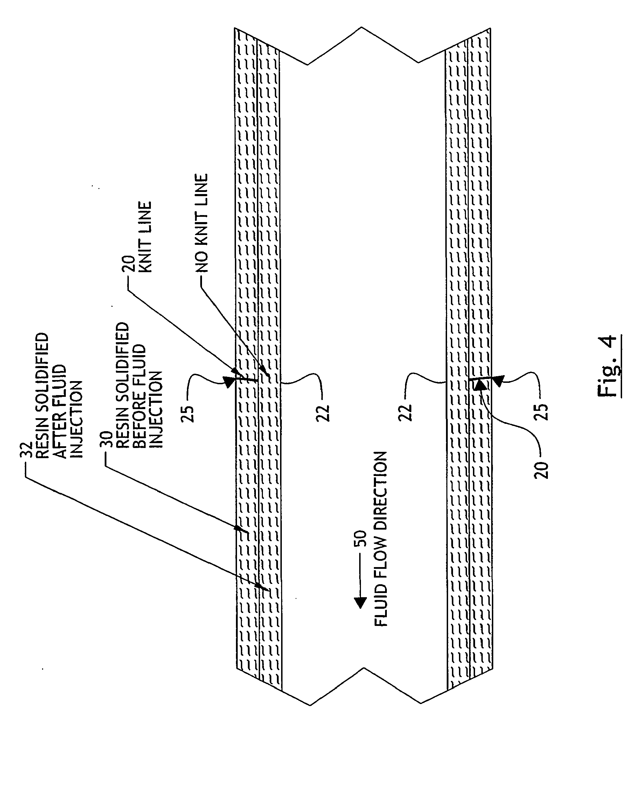

FIGURE 2A is an illustration of a section taken along a mold centerline and illustrating a process and apparatus for molding an article according to a preferred embodiment of the invention, that is, a preferred "short shot" method, showing unfilled cavities prior to fluid injection. After fluid injection, knit lines (not shown) are formed as the molten resin continues to flow within the mold cavity 14 and the flow fronts 16 collide. As will be recognized by those of ordinary skill, the knit lines represent areas of weakened structural strength in articles molded according to prior art techniques. Thus, the flow rates of the molten resin into the gates 12 and the location of the gates 12 are selected so that knit lines are formed in areas of the molded article which are less likely to be subject to large forces. Further, as shown in FIGURE 4, after fluid injection, the knit lines are formed in a first layer 30 of solidified resin, but not in second layer 32 of solidified resin, thereby providing increased strength across knit lines 20.

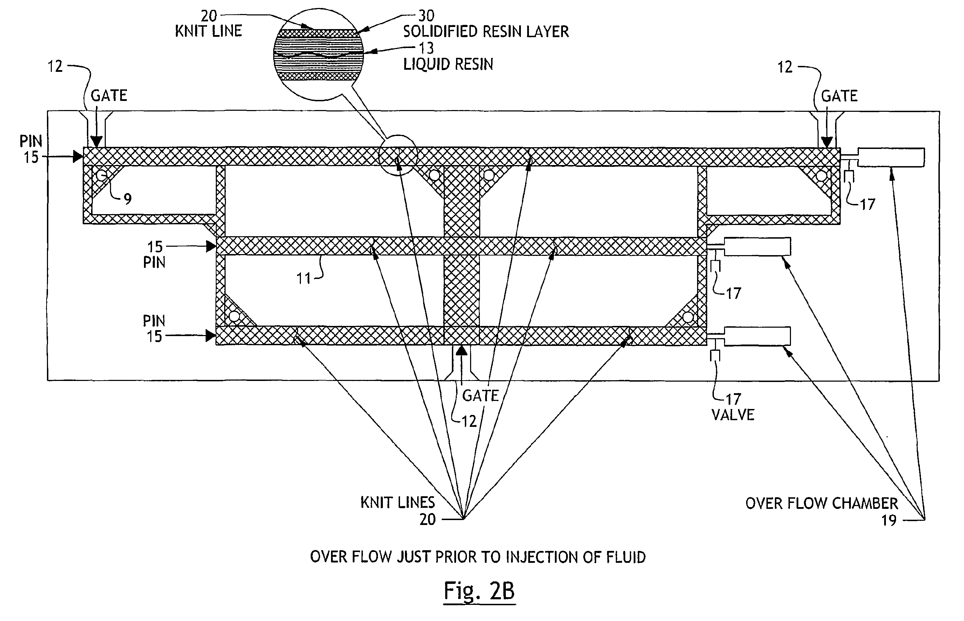

FIGURE 2B is an illustration of a section taken along a mold centerline and illustrating a process and apparatus for molding an article according to another preferred embodiment of the invention, that is, a preferred "overflow" method, showing the formation of knit lines in a solidified outerlayer, and no knit lines in a liquid resin inner layer prior to fluid injection. Further, as shown in FIGURE 4, after fluid injection, the knit lines are formed in a first layer 30 of solidified resin, but not in second layer 32 of solidified resin, thereby providing increased strength across knit lines 20.

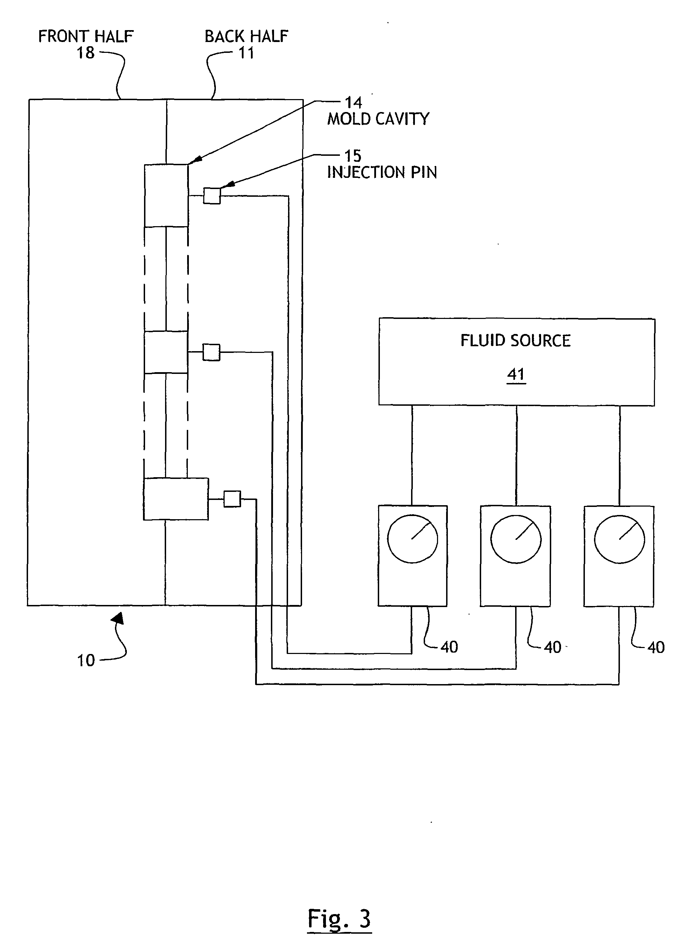

FIGURE 3 is an illustration of a section taken along a side view and illustrating a process and apparatus for molding an article according to a preferred embodiment of the invention, showing a fluid injection apparatus for forming of at least one fluid channel. The front half 18 and the back half 11 of the mold 10 meet together to form the mold cavity 14. A fluid injection pin(s) 15 permits fluid injection at the appropriate time to form the desired fluid channel 50 as shown in FIGURE 4. A fluid injection control unit 40 is coupled to each fluid injection pin 15 and provide control of the fluid from fluid source 41 so that the desired fluid channels 50 are achieved.

Referring to FIGURE 4, in accordance with an aspect of the invention, the molded article is formed with one or more fluid channels 50 extending substantially through the cross-member cavities 8 of the molded structure and across the knit lines 20. As will be appreciated by those of ordinary skill in the art, the fluid channel 50 forms a very strong fiber-reinforced tube within the molded article. Moreover, as illustrated in FIGURE 4, the reinforcing fibers 22 extend across the knit lines 20, thereby strengthening the molded article at the knit line interface.

The formation of fluid channels 50 according to the invention, are accomplished by the use of one or more nozzles provided at or near one end of cross member cavities 8, for injecting fluid into the molten resin 13. Such nozzles are preferably of such a diameter or lateral dimension that their presence does not significantly impact the structural strength of the molded article. Moreover, such nozzles may be provided as retractable elements which may be retracted before the entire quantity of resin within the mold is cured, thereby providing for some molten resin to migrate into the hole left by the nozzle.

It will be understood that the injection of fluid should occur at a time that is late enough in the molding process that the peripheral surface of the molten resin has solidified or become semi-solid due to cooling by contact with the mold to form a first layer 30 before fluid injection, yet early enough in the molding process that the center of the resin stream remains in a molten state. Introduction of fluid results in displacement of the molten resin in a generally longitudinal direction and across the knit line to form a second layer 32 of solidified molten resin after fluid injection.

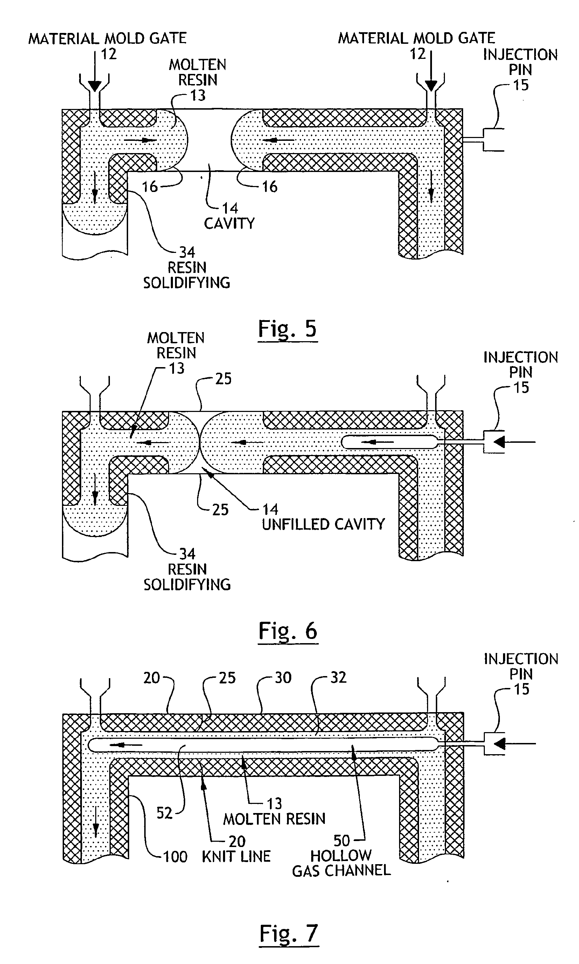

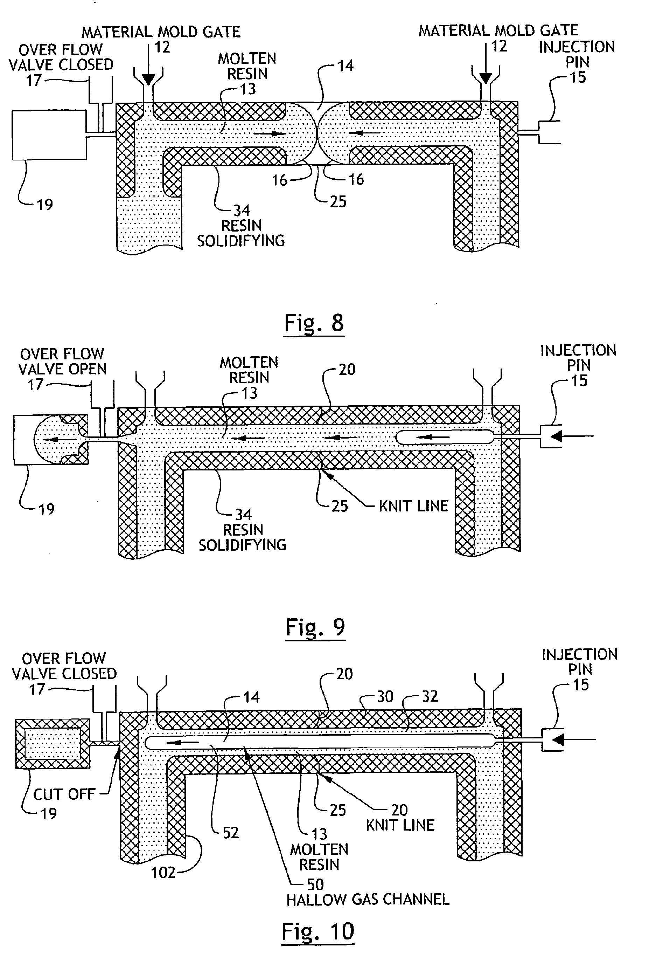

As can be seen in FIGURE 4, which is a magnified view of the fluid channel 50 formed by the apparatus and method shown in FIGURES 1-3, the peripheral layer or first layer 30 of solidified resin has solidified with knit line 20. The knit line 20 is a weakened area because the resin began to solidify at the surface of the flow fronts before meeting, resulting in weak fusion. The fibers 22 also do not cross the knit line 20 in first layer 30. During the fluid injection stage, the fluid displaces resin that has not solidified, that is molten resin 13 in central portion 52 (shown in Figures 7 and 10), through mold cavity 14. As shown in the embodiment depicted in Figures 5-7, during the fluid injection stage the displaced molten resin 13 continues to form a first layer 30 along the mold surface, and to form a second layer 32 inside the peripheral layer or first layer 30 of solidified resin, wherein the second layer 32 is devoid of a knit line. As shown in the embodiment depicted in Figures 8-10, during the fluid injection stage, displaced molten resin overflows to an overflow chamber 19, while molten resin remaining the mold cavity forms second layer 32 inside the peripheral layers or first layer 30 of solidified resin, wherein the second layer 32 is devoid of a knit line. The invention therefore provides for increased strength in the vicinity of the knit lines 20 in the first layer 30 of solidified resin.

Injection of fluid to form a fluid channel in the mold may be accomplished according to a "short shot" or "packing out" method as shown in FIGURES 2A and 5-7, or alternatively, according to an "overflow method" as shown in FIGURES 2B and 8-10. In the "packing out" method illustrated in FIGURES 5-7, as the molten resin 13 flows from the material mold gate 12, portions 34 of the resin begin to solidify to form first layer 30. As the molten resin 13 continues to flow into the mold cavity, more of the unfilled cavity 14 is filled. As the desired time, fluid is injected via the fluid injection pin 15, forcing the molten resin 13 toward the outside walls of the mold such that a fluid channel 50 is formed in the central portion 52 of the mold cavity 14 and a knit line 20 is formed at a longitudinal point 25 in the mold cavity 14 where the flow front 16 meet. The remaining molten resin 13 then solidifies to form second layer 32 of solidified resin. As shown in Figure 7, second layer 32 is devoid of a knit line. Part 100, which is formed according to this embodiment, thus has a second layer 32 of solidified resin devoid of a knit line in the vicinity of knit line 20 in first layer 30. Part 100 has increased strength and structural integrity due to the second layer 32 devoid of knit lines in the vicinity of knit line 20 in first layer 30.

In the "overflow" method shown in FIGURES 2B and 8-10, while the overflow valve 17 is closed, the molten resin 13 is inserted through the material mold gates 12. At a predetermined time when the molten resin has filled a substantial portion of the mold cavity, the overflow valve 17 is opened and fluid is injected via an injection pin(s) 15 to form the desired fluid channel 50 substantially in the central portion of the molded component. The injected fluid displaces some molten resin 13 out of mold cavity 14 through overflow valve 17 and into overflow chamber 19. Upon formation of the desired fluid channel 50, the resin adjacent to the walls of the mold has solidified in first layer 9300 and has formed a knit line 20 at longitudinal point 25 in mold cavity 14 where flow fronts 16 meet, and the overflow valve 17 is closed. The remaining molten resin then solidifies to form second layer 32 of solidified resin. As shown in Figure 10, second layer 32 is devoid of a knit line. Part 102, which is formed according to this embodiment, thus has a second layer 32 of solidified resin devoid of a knit line in the vicinity of knit line 20 in first layer 30. Part 102 has increased strength and structural integrity due to the second layer 32 devoid of knit lines in the vicinity of knit line 20 in first layer 30. If desired, overflow chamber 19 can be grabbed by grabbers (not shown) to remove the part 102 from the mold. Overflow chamber 19 can be removed from part 102 using any suitable method, such as pulling off overflow holder 19 or trimming overflow chamber 19 from part 102.

As previously noted, the fluid is a pressurized liquid. Liquids, such as water, cool and solidify the molten resin faster than a gas, thereby providing for shorter cycle time to form a part. Further, a liquid, such as water, is heavier than a gas, and thus can more easily form a fluid channel in molten resin than a gas. Thus, a liquid can form larger diameter and longer fluid channels in a molten resin than a gas. After the second layer 32 has solidified, the fluid can be retained or expelled from the fluid channel as may be desired.

Co-injection of multiple resin materials at the same or different gates is used in accordance with the present invention. Thus, if desired, the first layer 30 can comprise a different resin or resin mixture than the second layer 32. In addition, co-injection of multiple resin materials at the same or different times at the same or different gates can be used in accordance with the present invention to obtain first layers 30 comprising a certain resin mixture at certain portions of a part, as well as obtaining second layers 32 comprising a certain resin or resin mixtures at certain portions of a part as may be desired. In addition, the present invention can include sequential valve gating as taught in U.S. Patent No. 5,762,855, which is incorporated herein by reference.

The fluid(s) used to form the fluid channels in accordance with the present invention can be allowed to exit the fluid channels after the first and second layers of solidified resins have been formed.

A pressurized liquid can be simply be drained from the fluid channel.

## Claims

1. A process for injection-molding an article with a fluid channel (50) formed therein to provide strength and structural integrity, comprising the steps of:
providing a mold (10) defining a mold cavity (14);
providing at least first and second molten resin streams within the mold cavity (14) wherein each resin stream has a flow (16) front and a center;
causing the flow fronts of the resin streams to meet at a longitudinal point (25) in the mold cavity and form a first layer (30) of solidified resin on the peripheral surface of the mold, the first layer (30) having at least one knit line (20) at the longitudinal point where the resin fronts meet; and
**characterized by**
introducing a liquid into either or both of the molten resin streams (13) in the mold (10) at a time to form a fluid channel and a second layer (32) of solidified molten resin, the second layer (32) between the fluid channel and the first layer, wherein the second layer (32) is devoid of a knit line at the longitudinal point (25) where the resin fronts meet in the first layer and wherein the first layer (30) comprise different resin or resin mixture than the second layer (32).

2. The process of claim 1 wherein the first molten resin stream and the second molten resin stream are injected into the mold cavity (14) at the same location, the flow front of the resin streams meeting at the longitudinal point (25) in the mold cavity (14) different than from the location of injection of the first and second molten resin streams, and the first molten resin stream or the second molten resin stream, or both, comprise co-injected resins.

3. The process according to claim 1 or 2 wherein the resin streams comprise reinforcing fibers.

4. The process according to claim 3 wherein the reinforcing fibers include glass fibers.

5. The process according to claim 3 wherein the reinforcing fibers include carbon fibers.

6. The process according to claim 1 or 2 wherein the resin streams comprise reinforcing particles.

7. The process according to claim 6 wherein the reinforcing particles comprise nanoparticles.

8. The process according to claim 7 wherein the nanoparticles comprise smectite clay.

9. The process according to any one of the preceding claims wherein the liquid is water.

10. The process according to any one of the preceding claims wherein the second layer (32) has reinforcing fibers oriented transverse to the knit line (20) in the first layer (30) and across the longitudinal point (25) in the mold cavity (14) where the flow fronts meet.

11. The process according to any one of the preceding claims wherein introducing the liquid is performed while the resin is maintained within the mold cavity (14).

12. The process according to any one of claims 1 to 10 wherein introducing the liquid is performed while some molten resin is allowed to exit the mold cavity (14) as liquid is introduced into the mold (10).

13. The process according to any one of the preceding claims wherein the first molten resin stream and the second molten resin stream are injected into the mold cavity (14) at different gate locations around the mold cavity.

14. The process according to claim 13 wherein the first molten resin stream and the second molten resin stream are injected into the mold cavity at different gate locations around the mold cavity and using sequential valve gating.

15. An article formed using the process according to any one of claims 1 to 14.

16. The article according to claim 15 wherein the article is a reinforcing member to support a vehicle component in a vehicle.

## Patentansprüche

1. Verfahren zum Spritzgießen eines Bauteils mit einem Fluidkanal (50), der hierin zur Bereitstellung einer Festigkeit und strukturellen Integrität bzw. Beständigkeit ausgebildet ist, das die folgenden Schritte umfasst:
Bereitstellen einer einen Formenhohlraum (14) definierenden Gussform (10),
Bereitstellen mindestens eines ersten und eines zweiten geschmolzenen Harzstroms innerhalb des Formenhohlraums (14), wobei jeder Harzstrom eine Fließfront (16) und einen Mittelpunkt umfasst,
Bewirken eines Zusammentreffens der Fließfronten der Harzströme an einem longitudinalen Punkt (25) in dem Formenhohlraum und einer Bildung einer ersten Schicht (30) von an der Umfangsfläche der Gussform erstarrtem bzw. verfestigtem Harz, wobei die erste Schicht (30) mindestens eine Verbindungslinie (20) an dem longitudinalen Punkt umfasst, an dem die Harzfronten zusammentreffen, und
**gekennzeichnet ist durch**
ein Einbringen einer Flüssigkeit in entweder einen oder jeweils beide geschmolzenen Harzströme (13) in der Gussform (10), um einen Fluidkanal und eine zweite Schicht (32) von erstarrtem geschmolzenen Harz zu bilden, wobei die zweite Schicht (32) zwischen dem Fluidkanal und der ersten Schicht angeordnet ist, wobei die zweite Schicht (32) frei von einer Verbindungslinie an dem longitudinalen Punkt (25) ist, an dem die Harzfronten in der ersten Schicht zusammentreffen, und wobei die erste Schicht (30) ein anderes Harz oder eine andere Harzmischung umfasst als die zweite Schicht (32).

2. Verfahren nach Anspruch 1, wobei der erste geschmolzene Harzstrom und der zweite geschmolzene Harzstrom an der selben Stelle in den Formenhohlraum (14) eingespritzt werden, wobei die Flussfront der an dem longitudinalen Punkt (25) in dem Formenhohlraum zusammentreffenden Harzströme sich von der Stelle der Einspritzung des ersten und zweiten geschmolzenen Harzstroms unterscheidet und der erste geschmolzene Harzstrom oder der zweite geschmolzene Harzstrom, oder beide, coinjizierte Harze umfassen.

3. Verfahren nach Anspruch 1 oder 2, wobei die Harzströme Verstärkungsfasern umfassen.

4. Verfahren nach Anspruch 3, wobei die Verstärkungsfasern Glasfasern umfassen.

5. Verfahren nach Anspruch 3, wobei die Verstärkungsfasern Kohlefasern umfassen.

6. Verfahren nach Anspruch 1 oder 2, wobei die Harzströme Verstärkungspartikel umfassen.

7. Verfahren nach Anspruch 6, wobei die Verstärkungspartikel Nanopartikel umfassen.

8. Verfahren nach Anspruch 7, wobei die Nanopartikel Smektit-Ton umfassen.

9. Verfahren nach einem der voranstehenden Ansprüche, wobei die Flüssigkeit Wasser ist.

10. Verfahren nach einem der voranstehenden Ansprüche, wobei die zweite Schicht (32) Verstärkungsfasern umfasst, die quer zu der Verbindungslinie (20) in der ersten Schicht (30) und über den longitudinalen Punkt (25) in dem Formenhohlraum (14), an dem die Flussfronten zusammentreffen, orientiert sind.

11. Verfahren nach einem der voranstehenden Ansprüche, wobei das Einbringen der Flüssigkeit durchgeführt wird, während das Harz in dem Formenhohlraum (14) verbleibt.

12. Verfahren nach einem der Ansprüche 1 bis 10, wobei das Einbringen der Flüssigkeit durchgeführt wird, während einem Teil des Harzes ermöglicht wird, den Formenhohlraum (14) zu verlassen, während Flüssigkeit in die Gussform (10) eingebracht wird.

13. Verfahren nach einem der voranstehenden Ansprüche, wobei der erste geschmolzene Harzstrom und der zweite geschmolzene Harzstrom an verschiedenen Eingussstellen rund um den Formenhohlraum in den Formenhohlraum (14) eingespritzt werden.

14. Verfahren nach Anspruch 13, wobei der erste geschmolzene Harzstrom und der zweite geschmolzene Harzstrom an verschiedenen Eingussstellen rund um den Formenhohlraum in den Formenhohlraum eingespritzt werden und ein sequentieller Ventilausguss verwendet wird.

15. Bauteil, das unter Verwendung des Verfahrens nach einem der Ansprüche 1 bis 14 hergestellt ist.

16. Bauteil nach Anspruch 15, wobei das Bauteil ein verstärktes Bauteil zur Unterstützung bzw. Stützung einer Fahrzeugkomponente in einem Fahrzeug ist.

## Revendications

1. Procédé pour mouler un article par injection comportant un canal à fluide (50) formé en lui-même pour procurer une résistance et une intégrité structurelle, comprenant les étapes consistant à :
fournir un moule (10) définissant une cavité de moule (14);
amener au moins un premier et un second flux de résine en fusion à l'intérieur de la cavité de moule (14), chaque flux de résine ayant une partie frontale et un centre de flux ;
amener les parties frontales des flux de résine à se rencontrer au niveau d'un point longitudinal (25) dans la cavité de moule et à former une première couche (30) de résine solidifiée sur la surface périphérique du moule, la première couche (30) ayant au moins une ligne de soudure (20) au niveau du point longitudinal où les parties frontales de résine se rencontrent ; et
**caractérisé en ce qu'**on introduit un liquide dans l'un ou l'autre ou dans les deux flux de résine en fusion (13) dans le moule (10) à la fois pour former un canal à fluide, et une seconde couche (32) de résine en fusion solidifiée, la seconde couche (32) étant entre le canal à fluide et la première couche, dans lequel la seconde couche (32) est dépourvue de ligne de soudure au niveau du point longitudinal (25) où les parties frontales de résine se rencontrent dans la première couche, et dans lequel la première couche (30) comprend une résine différente ou un mélange de résines différent de la seconde couche (32).

2. Procédé selon la revendication 1, dans lequel le premier flux de résine en fusion et le second flux de résine en fusion sont injectés dans la cavité de moule (14) au même emplacement, les parties frontales des flux de résine se rencontrant au niveau du point longitudinal (25) dans la cavité de moule (14) différent de l'emplacement d'injection du premier et du second flux de résine en fusion, et le premier flux de résine en fusion ou le second flux de résine en fusion, ou les deux, comprennent des résines co-injectées.

3. Procédé selon la revendication 1 ou 2, dans lequel les flux de résine comprennent des fibres de renfort.

4. Procédé selon la revendication 3, dans lequel les fibres de renfort incluent des fibres de verre.

5. Procédé selon la revendication 3, dans lequel les fibres de renfort incluent des fibres de carbone.

6. Procédé selon la revendication 1 ou 2, dans lequel les flux de résine comprennent des particules de renfort.

7. Procédé selon la revendication 6, dans lequel les particules de renfort comprennent des nanoparticules.

8. Procédé selon la revendication 7, dans lequel les nanoparticules comprennent de l'argile de smectite.

9. Procédé selon l'une quelconque des revendications précédentes, dans lequel le liquide est de l'eau.

10. Procédé selon l'une quelconque des revendications précédentes, dans lequel la seconde couche (32) possède des fibres de renfort orientées transversalement à la ligne de soudure (20) dans la première couche (30) et à travers le point longitudinal (25) dans la cavité de moule (14) où les parties frontales des flux se rencontrent.

11. Procédé selon l'une quelconque des revendications précédentes, dans lequel l'introduction du liquide est exécutée alors que la résine est maintenue dans la cavité de moule (14).

12. Procédé selon l'une quelconque des revendications 1 à 10, dans lequel l'introduction du liquide est exécutée alors que l'on permet à une partie de la résine en fusion de sortir hors de la cavité de moule (14) alors que le liquide est introduit dans le moule (10).

13. Procédé selon l'une quelconque des revendications précédentes, dans lequel le premier flux de résine en fusion et le second flux de résine en fusion sont injectés dans la cavité de moule (14) à différents emplacements d'entrée autour de la cavité de moule.

14. Procédé selon la revendication 13, dans lequel le premier flux de résine en fusion et le second flux de résine en fusion sont injectés dans la cavité de moule à des emplacements d'entrée différents autour de la cavité de môle et en utilisant une ouverture de valve séquentielle.

15. Article formé en utilisant le procédé selon l'une quelconque des revendications 1 à 14.

16. Article selon la revendication 15, dans lequel l'article est un élément de renfort pour supporter un composant dans un véhicule.
